# EUROPEAN PATENT APPLICATION

(11) **EP 3 798 707 A1**
(43) Date of publication of application: **31.03.2021**
(21) Application number: 20305506.6
(22) Date of filing: 15.05.2020
(51) Int. Cl.: G02B 6/44, H01B 11/06, H01B 11/22

(54) **FIBER/COPPER CABLE WITH OPTICAL FIBERS POSITIONED WITHIN CABLE FILLERS**

(30) Priority: 25.09.2019 US 201916582739
(71) Applicant: Berk-Tek LLC, New Holland, PA 17557 (US)
(72) Inventor: GOOD, Paul Michael, New Holland, PA 17557 (US)
(74) Representative: Ipsilon

(57) **Abstract**

A cable comprising:
a plurality of twisted pair conductor elements, at least one of which is configured for power transmission and at least one of which is configured for signal transmission;
at least one cable filler element, configured to at least partially separate one of said plurality of twisted pairs from another, said at least one cable filler element having at least one hollow opening; and
at least one optical fiber, said at least on optical fiber positioned within said at least one hollow opening of said at least one cable filler element.

## Description

### Field of the Invention:

This application relates to a modified composite copper/fiber cable. More particularly, this application relates to fiber optic components positioned within cable fillers.

### Description of Related Art:

In the prior art, there are at least two markets that require a combination of copper twisted-pairs and fiber optic signal transmissions as well as power supply cables. These markets are 4G/5G cell phone telecommunications and military installations. For example, in one prior art arrangement for 5G cellular applications, separate cables, such as a category copper cables, fiber optic cables and separate power cables are all used in parallel to support multiple types of equipment located close to the antennas

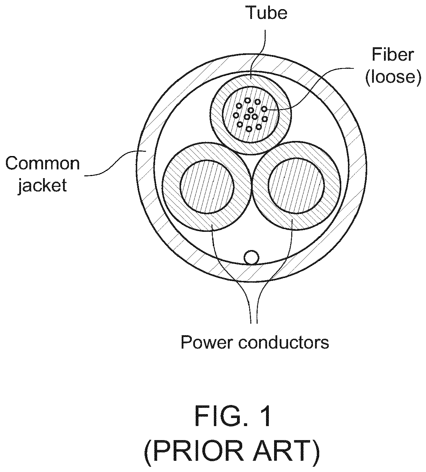

Another possibility for supporting such equipment is to provide category/copper cables along with separate fiber/power cables with fiber and power components included within a single jacket, as illustrated in prior art Figure 1. Such an arrangement would reduce the amount of cables required at the installation.

Other markets that require robust power and communication signal connections is the military market. Here there are applications for cables with both fiber and copper twisted pairs. The fibers are used to sense any physical movement of the structured cabling as part of the intrusion detection system. The copper twisted pairs are simultaneously used to provide the Ethernet data (VoIP phone, IP Camera, Network Connection, etc...) and power over Ethernet (PoE) and the fiber would be used for the sensing application.

The needs highlighted demonstrate different situations that require various cabling/connections for power, combined with copper signal cables and/or fiber signal connections. Such connections may be for high bandwidth devices to be remotely powered and thus require either a composite cable with copper conductors and fiber optics strands or two or more separate cables. Moreover, such composite and/or hybrid cables have significant costs in terms of installation labor and the amount of space taken up in pathways.

Regarding security as discussed above, systems employing such cable bundles typically include a single "sensor" fiber cable per bundle/pathway to detect cable intrusions (i.e. in military settings). However, such arrangements using a separate fiber cable per pathway are unable to track intrusion to a single cable, only to the cable pathway as a whole such as a conduit, tray, duct, etc...

### Objects and Summary:

The present arrangement overcomes the drawbacks associated with the prior art and provides a copper/fiber cable that uses twisted pair copper conductors for data transmission (1000BASE-T, 10GBASE-T, etc....) and power (PoE, LV DC, LV AC, PoDL, etc....) rather than just power. Also included within the power/copper cables, are fiber optic elements that can be used for either additional signal communications and/or intrusion detection, where the fiber components can be used to measure other characteristics such as temperature, stress, strain or pressure. Unlike the prior art, where the fiber elements are separately insulated/buffered within the same jacket as the twisted pairs, the present optical fiber components are instead included inside the filler(s) traditionally present in any case in the category rated twisted-pair cables (e.g. CAT6, CAT6A, etc....) Such an arrangement for the optical fiber elements results in less space being consumed in the pathway and the movements (or other characteristics) of individual category cables being tracked.

Such an arrangement, allows not only for lower overall diameters for cables that contain all of copper signal transmission, fiber signal transmission, and power, particularly relative to traditional composite cables with fiber components are separately jacketed components in traditional tubing/buffering. Moreover, as each of such cables would include at least one fiber element, when used in high security situations, every cable would have at least one fiber element that could be used for cable-by-cable intrusion detection.

To this end a signal and power cable is provided with a plurality of twisted pair conductor elements, at least one of which is configured for power transmission and at least one of which is configured for signal transmission. At least one cable filler element is configured to at least partially separate one of the plurality of twisted pairs from another, the at least one cable filler element having at least one hollow opening. At least one optical fiber, the at least on optical fiber positioned within the at least one hollow opening of the at least one cable filler element.

### Brief Description of the Drawings:

The present invention can be best understood through the following description and accompanying drawing, wherein:
Figure 1 is a prior art images of a fiber/power cable;
Figure 2 shows a cable with twisted pair copper conductors and filler elements, with optical fibers disposed in the fillers, in accordance with one embodiment;
Figure 3 shows a cable with twisted pair copper conductors and filler elements, with optical fibers disposed in the fillers, in accordance with another embodiment;
Figure 4 shows a cable with twisted pair copper conductors and filler elements, with one optical fiber disposed in the filler, in accordance with another embodiment;

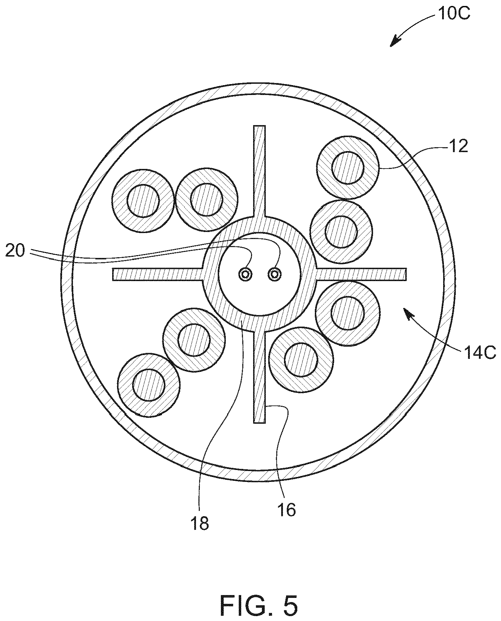

Figure 5 shows a cable with twisted pair copper conductors and filler elements, with optical fibers disposed in the filler, in accordance with another embodiment; and
Figure 6 shows a cable with twisted pair copper conductors and filler elements, with optical fibers disposed in the fillers and some without fibers, in accordance with another embodiment.

### Detailed Description:

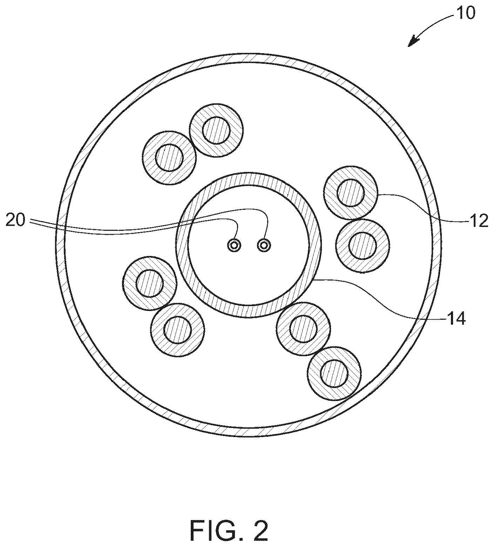

In one embodiment of the present invention as shown in Figure 2, a twisted pair cable 10 is shown having four twisted pairs 12, a central filler 14 and a jacket 16. This type of twisted pair cable with a single central hollow filler 14 is typically used for providing physical separation between the pairs 12 to control impedance and/or crosstalk and to provide physical robustness for installation (and also helping retain the round shape of cable 10). Although for the purpose of illustration, cable 10 is shown having only four twisted pairs 12, it is understood that cable 10, using the inventive features discussed in more detail below could also be applied to cables 10 having as few as two twisted pairs 12 or as many as many as 25, 50, 100 or more pairs 12 in larger arrangements.

In one arrangement, cable 10 may be configured to operate as a PoE cable with one or two of twisted pairs 12 used for power and two or three of pairs 12 used for category level signal communication. It is understood that such cable 10 and the various pairs 12 may be configured to support PoE in any of its various incarnations. For example, for cables 10 designed to carry 10/100 mbps traffic, there are two powering schemes. In one arrangement, two pairs 12 are used for data transmission and the other pairs 12 are used for power transmission (this is sometimes referred to as the 'spare pair' powering scheme). In another PoE arrangement two pairs 12 are unused and the other two pairs 12 are used for both data and power. In other PoE arrangements for 1Gbps and faster speeds, all four pairs 12 pairs are used for data and either two or four of pairs 12 are simultaneously used for data and power depending on the power level (e.g. PoE (12.95W delivered to the device) and PoE+ (25.5W delivered to the device) use only two pairs). In yet another arrangement, cable 10 can use its pairs 12 in a PoE++ that delivers up to ∼90W using all four pairs 12 in cable 10. It is understood that any such powering arrangement for the pairs 12 of cable 10 may employed in each embodiment as applicable.

As shown in Figure 2, central filler hollow and therein are two fiber optic elements 20. In this arrangement, fibers 20 may be used for detecting tampering of the cable or one of the fibers can be used for detection circuits, while the other is used for additional signal transmission. This filler 14 is on the smaller side and does not provide full separation of pairs 12 but, because it is small, it does not overly affect the outside diameter of cable 10. Such a cable could be used to support Cat5E level twisted pair communications.

It is understood that Figure 2 does not show shields over pairs 12, over all the elements of cable 10, nor does it show typical drain wires and rip cords, but it is understood that such elements can be included in this and the other embodiments as needed.

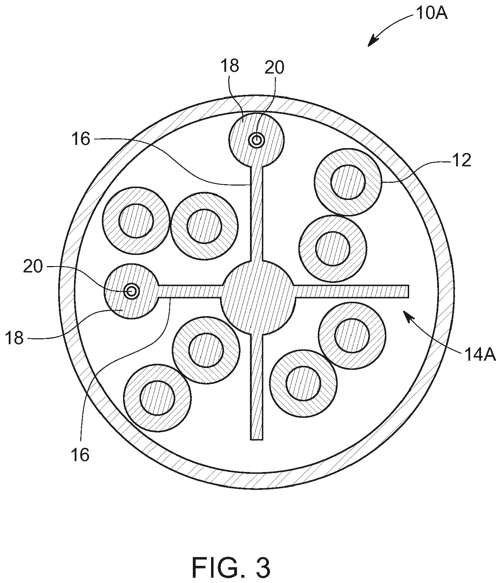

In another embodiment as shown in Figure 3, cable 10A, likewise has four twisted copper pairs. However, here filler 14A is in a more typical cross filler for more complete separation of pairs 12. Filler 14A has two arms 16 for separating each of four pairs 12 from one another. At the end of arms 16, each arm 16 has an expanded hollow region 18 with at least one fiber optic element 20 therein. Here fiber 20 may be in a tight buffer arrangement within hollow 18 of arms 16. Such an arrangement with more complete separation of pairs 12 may be used for CAT 6 and higher levels of twisted pair communications.

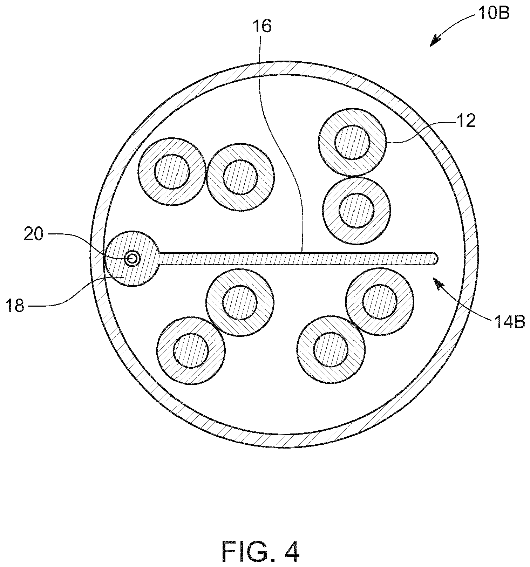

In another embodiment as shown in Figure 4, cable 10B likewise has four twisted copper pairs. However, here filler 14B is in a simple, cross cable arm filler for separating two pairs 12 from the other two pairs 12 by a single arm 16 for separating each of four pairs 12 from one another. At the end of arm 16, an expanded hollow region 18 has at least one fiber optic element 20 therein. As in Figure 3, fiber 20 may be in a tight buffer arrangement within hollow element 18 of arms 16. Such an arrangement with partial separation of pairs 12 may be used for CAT 5e/CAT6 levels of twisted pair communications (depending on other shielding) but is otherwise lighter than cable 10B of Figure 3.

In one embodiment as shown in 5, a cable 10C is shown having twisted pairs 12 and a separator 14C that is a mix between the embodiments from Figures 2 and 3. Here filler 14C has both a hollow center 18 and four arms 16 for separating each of pairs 12. Fiber optic elements 20 are disposed within the central hollow region 18. Because of the complete separation of pairs 12 from one another cable 10C may be used for high level communications (CAT 6 and above). However, because of the hollow center 18, located centrally, it may be better suited for outdoor installation (better able to withstand temperature/environmental issues).

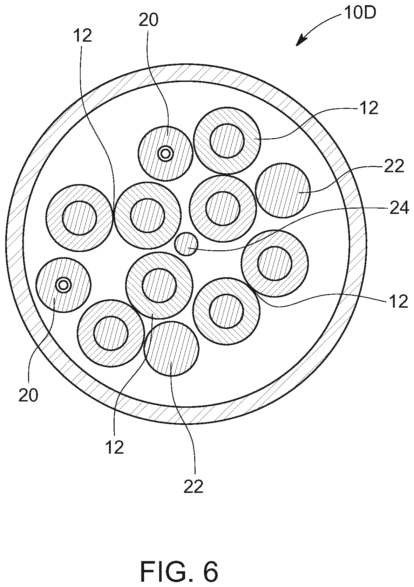

In one embodiment as shown in Figure 6, four twisted pairs 12 are found in cable 10D. interspersed within the jacket are tight buffer fibers (e.g. 900um tight buffered fibers) 20 along with additional round fillers 22 and a small central filler 24 for shape (e.g. polymer fillers). This design would be for added ruggedness with a cable that still round. The relatively small filler in the middle would allow for CAT 5e or 6 performance by twisted pairs 12.

## Claims

1. A cable comprising:
a plurality of twisted pair conductor elements, at least one of which is configured for power transmission and at least one of which is configured for signal transmission;
at least one cable filler element, configured to at least partially separate one of said plurality of twisted pairs from another, said at least one cable filler element having at least one hollow opening; and
at least one optical fiber, said at least on optical fiber positioned within said at least one hollow opening of said at least one cable filler element.

2. The cable as claimed in claim 1, wherein said at least one cable filler element is a hollow tube at the center of said signal and power cable.

3. The cable as claimed in claim 2, wherein said at least one cable filler element includes two optical fibers.

4. The cable as claimed in claim 1, wherein said at least one cable filler element has two arms, with at least one tight buffered optical fiber located at the end of each of said arms, said arms completely separating said twisted pairs from one another.

5. The cable as claimed in claim 1, wherein said at least one cable filler element has one arm, with at least one tight buffered optical fiber located at the end of the arm, said arm completely separating at least two twisted pairs from another two of said twisted pairs.

6. The cable as claimed in claim 1, wherein said at least one cable filler element is a hollow tube at the center of said signal and power cable, said at least one cable filler element includes two optical fibers, and wherein said hollow tube also has four arms extending therefrom separating said twisted pairs from one another.

7. A cable comprising:
a plurality of twisted pair conductor elements, at least one of which is configured for power transmission and at least one of which is configured for signal transmission;
at least two round cable filler elements, configured to at least partially separate one of said plurality of twisted pairs from another,
at least two tight buffered optical fibers; and
at least one small central filler in the center of said cable.
